(19) **Europäisches Patentamt**
**European Patent Office**
**Office européen des brevets**

(11) **EP 2 637 353 B1**

(12) **EUROPEAN PATENT SPECIFICATION**

(45) Date of publication and mention
of the grant of the patent:
**18.05.2016 Bulletin 2016/20**

(51) Int Cl.:
*H04L 12/18* (2006.01)    *H04N 7/14* (2006.01)

(21) Application number: **12290076.4**

(22) Date of filing: **06.03.2012**

(54) **A system for remote collaboration**

System zur Fernzusammenarbeit

Système de collaboration à distance

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**11.09.2013 Bulletin 2013/37**

(73) Proprietor: **ALCATEL LUCENT
92100 Boulogne-Billancourt (FR)**

(72) Inventors:
• **Aerts, Maarten
9120 Beveren (BE)**

• **Lievens, Sammy
2930 Brasschaat (BE)**
• **Tytgat, Donny
9860 Oosterzele (BE)**
• **Six, Erwin
9270 Kalken (BE)**

(74) Representative: **ALU Antw Patent Attorneys
Copernicuslaan 50
2018 Antwerpen (BE)**

(56) References cited:
**EP-A2- 1 564 682       US-A- 4 400 724
US-A1- 2006 221 188**

**Description**

**Field of the Invention**

The present invention generally relates to remote collaboration between people at different locations. The invention in particular relates to remote collaboration in an enterprise environment between different locations during which participants desire to visualize their ideas, preferably by drawing.

**Background of the Invention**

Remote collaboration in an enterprise environment has evolved over the past years to collaboration making use of electronic tools like teleconferencing systems, video conferencing tools, discussion forums, brainstorm platforms, etc.

In order to enable people present at different locations and participating to a single virtual meeting, e.g. via teleconference, to visualize their ideas, roughly three different existing solutions are known. These existing solutions however fail to gain market penetration for various reasons outlined below.

A first existing solution consists of a virtual whiteboard, i.e. a networked software application that the different participants run on their respective computers during the meeting and that enables the participants to draw in a window or screen that is shared with all participants and displayed on the participants' computer screens. The drawing is done using traditional tools like a mouse or joystick.

Such whiteboard software applications are known for years but their acceptance is slow for several reasons. The common space remains small, i.e. the size of a computer display, and interaction with such electronic whiteboard is slow since drawings have to be made using a mouse or joystick, text has to be entered using a keyboard, etc. For participants to meetings, the ability to draw fast when sharing their ideas is a must. Moreover, good freehand mouse-drawing skills are required of the participants. Otherwise, the participants are restricted to a limited set of predefined drawing tools in the software application. In summary, the fast and the tactile experience people have when drawing on a traditional whiteboard cannot be replaced by the existing software applications.

A second solution consists in a software application that interfaces with a multi-touch screen, e.g. on a tablet computer, or a multi-touch table. The participants are now able to draw using a pen or their fingers which better resembles a traditional whiteboard. The acceptance of this second solution however is dependent on the availability of tablet PCs for all participants to the meeting. Further, the resolution and size of a typical touch screen on tablet PCs prevents very accurate drawings. As a consequence, small text cannot be entered, a selection tool may be required, etc., rendering also touch-screen based whiteboard applications rather cumbersome in use.

A third existing solution consists of a smartboard, i.e. a sensorial board whereon a participant can draw using a pen while the common drawing obtained by combining the drawings of all participants is projected on the board using a beamer. Again, acceptance of such smartboards is rather weak because each location involved in the meeting has to be equipped with the rather expensive sensorial board and beamer. Further, the resolution of such smartboards is rather weak as a result of which it does not perform well on text input.

In addition to the above mentioned drawbacks, any of the above existing prior art solution has as disadvantage that it must be integrated with existing teleconference applications.

United States Patent US 4,400,724, entitled "Virtual Space Teleconference System" describes a video teleconference system wherein an overhead camera at each location involved in a videoconference captures images of for instance a tablet (see Col. 3, lines 9-10), a composite image is generated from the captured images at the different locations (see Col. 3, lines 10-14), and the composite image is transferred to the different locations in order to be displayed there (see Col. 8, lines 1-3). The system of US 4,400,724 is analogue and the composite drawing lacks quality.

It is an objective of the present invention to provide a system that enables people to remotely meet and collaborate, thereby resolving the drawbacks of existing solutions mentioned here above. More particularly, it is an objective to enable people at remote locations to share ideas with each other using a single surface that can be written on by all people involved in the collaboration. It is a further objective to avoid using expensive tools like touch-screen based tablet PCs, beamers, sensorial boards, and to avoid using interface devices like a mouse, joystick or keyboard that slow down interaction and deprive a person involved in the collaboration from the tactile experience of drawing.

**Summary of the Invention**

According to the invention, the above identified objectives are realized by a system comprising an application for remote collaboration between multiple parties at different locations as defined by claim 1, the application being adapted to receive a local image of a paper sheet or whiteboard, captured at each location by a camera and the application being adapted to merge local images captured at the different locations to thereby generate a common image so that a single surface can be written on by all the parties,
wherein the application further comprises:

- registration means adapted to register each local image by geometrically transforming image pixels within the local image to image pixels of the common image through translation and rotation; and
- segmentation means adapted to segment each local image by compensating for differing backgrounds between the local images.

Thus, the invention consists in using video cameras, typically already available in a videoconference system, pointing these cameras at a white sheet of paper or alternatively at an actual whiteboard when this is available at a participant's location, and drawing on the paper or whiteboard with a regular pencil. A software application merges the feeds from the video cameras at the different locations, generates a common composite drawing, and forwards this common composite drawing to the participants' computers in order to be displayed on a regular PC display. The system is integrated or easy to integrate with a videoconference system, enables the participants to visualize their own ideas by pencil drawings on a sheet of paper or a whiteboard, and requires only the participants' computers to be present at the location from where they participate to the meeting.

In order to produce a qualitative common composite drawing, it is important that all views are carefully registered, i.e. the geometrical transformation from each sheet of paper to the common view on the screen must be determined.

In order to produce a qualitative common composite view, it is also important that the drawings are properly segmented, i.e. compensations for the differing backgrounds are applied, under varying light conditions.

In one embodiment of the system for remote collaboration according to the present invention, defined by claim 2, the registration means comprise:

- means for detecting at least three edges of the paper sheet or the whiteboard; and
- means for geometrically transforming image pixels within the paper sheet or whiteboard.

Indeed, when at least three edges of the paper sheet or whiteboard are visible to the camera, and the assumption is made that the sheet of paper or whiteboard is rectangular in shape, the correct transformation from the sheet or whiteboard to the pixels in the common view on the screen, can be determined.

In a second embodiment of the system for remote collaboration according to the current invention, defined by claim 3, the registration means comprise:

- means for detecting a quasi-rectangle drawn on the paper sheet or the whiteboard; and
- means for geometrically transforming image pixels within the quasi-rectangle.

Thus, the second embodiment requires the user/participant to the meeting to draw an approximate rectangle on the sheet or whiteboard to enable the application to calibrate. The quasi-rectangle drawn by the user can be detected by the camera and the best-fitting transformation from the quasi-rectangle to the pixels in the common view on the screen, can be determined.

In a third embodiment of the system for remote collaboration according to the current invention, defined by claim 4, the registration means comprise:

- means for detecting a drawing on the paper sheet or the whiteboard; and
- means for geometrically transforming image pixels based on tracking of the drawing.

Hence, registration may also be done on the basis of detection and tracking of the drawing itself. As long as there is no drawing, the common view is created from the untransformed camera feeds. As soon as drawing begins, the drawings themselves become features that need to be stabilized. Whenever a sheet of paper is translated or rotated, the inverse transformation is applied by the application to compensate for the translation or rotation and to register the drawing stably in the common view. It is noticed that the first, second and third registration embodiments may be combined with each other.

A first embodiment of the segmentation assumes that the paper is sparsely drawn upon. The segmentation function looks for the observed shade of white in each region of the image, and sets it to the most prominent light colour in the local neighbourhood, thereby omitting all other colours as they are assumed to constitute the actual pencil drawing. The alpha-mask is determined by taking the difference between the observed pixel colour and the estimated local shade of white. the alpha-mask sets the transparency of the image enabling merging multiple feeds from multiple cameras on top of each other.

In an alternative embodiment of the system for remote collaboration according to the current invention, defined by claim 5, the segmentation means comprise:

- means for dilating an observed image; and
- means for subtracting the dilated image from the observed input image.

Thus, in the alternative implementation of the segmentation function, it is assumed that thin structures are drawn, not necessarily sparse. The observed image is dilated several times. Dilation means applying the lightest colour within a small window to all pixels in that window. As a result of dilation, thin dark structures disappear. the resulting dilated image is then subtracted from the original input image to determine the alpha-mask.

In yet another alternative embodiment of the application for remote collaboration according to the present invention, defined by claim 6, the segmentation means comprise:

- means for learning a paper colour; and
- means for determining a difference between an observed pixel colour and the paper colour learned.

Thus, the third implementation of the segmentation function does not assume anything on the paper, but assumes a quasi time-constant local paper sheet colour. The pixel colour of the paper sheets in other words is assumed not to vary a lot over time. The colour model may be adaptive to compensate for these limited variations, but not to an extent that it risks learning ink colours as the colour of paper.. Any pixel outside the learned colour model is considered ink and therefore part of the pencil drawing.

It is noticed that the different embodiments of the segmentation function may be combined in a single system, and it is also noticed that an implementation of the system according to the invention without segmentation may be contemplated as well. Two or more images, received from different cameras, may be combined in a non-adaptive way. The images may be added or multiplied. This may lead to acceptable results from a user experience perspective.

In addition to system as defined by claim 1, the current invention also relates to a corresponding computer-implemented method of operating a data processing system in a system for remote collaboration between multiple parties at different locations, as defined by claim 7, the method comprising:

- receiving from a camera at each location a local image capturing a paper sheet or whiteboard at the location;
- merging local images captured at the different locations to thereby generate a common image so that a single surface can be written on by all the parties; and
- distributing the common image to a display at each location to be displayed, wherein prior to merging the local images, the method comprises:
- registering each local image by geometrically transforming image pixels within the local image to image pixels of the common image through translation or rotation; and
- segmenting each local image by compensating for differing backgrounds between the local images.

Furthermore, the present invention relates to a corresponding computer program comprising software code adapted to perform the method, as defined by claim 8, and to a corresponding computer readable storage medium comprising the computer program, as defined by claim 9.

## Brief Description of the Drawings

Fig. 1 illustrates an embodiment of the application for remote collaboration according to the present invention;

Fig. 2 is a functional block scheme of an embodiment of the application for remote collaboration according to the present invention involving two users; and

Fig. 3A - Fig. 3I illustrate the contents of certain signals in Fig. 2.

## Detailed Description of Embodiment(s)

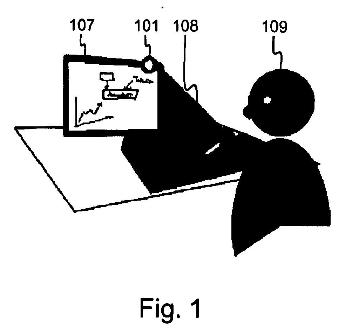

As is illustrated by Fig. 1, the current invention makes use of a camera 101 at each location involved in remote collaboration, a paper sheet 108 or alternatively a whiteboard whereon the user 109 draws with a pencil, and a display 107 whereon a composed drawing is displayed combining the pencil drawings of all users at the different locations. The camera 101 can be the video camera already available in any videoconference system, or the camera available in the personal computer or laptop of a user. The display 107 can be the user's computer screen or a dedicated TV screen that forms part of the videoconference system.

As is shown in Fig. 1, the user 109 at one location draws with pencil on paper 108. This is captured by the camera 101. The user simultaneously gets feedback about the composed drawing via the computer screen 107.

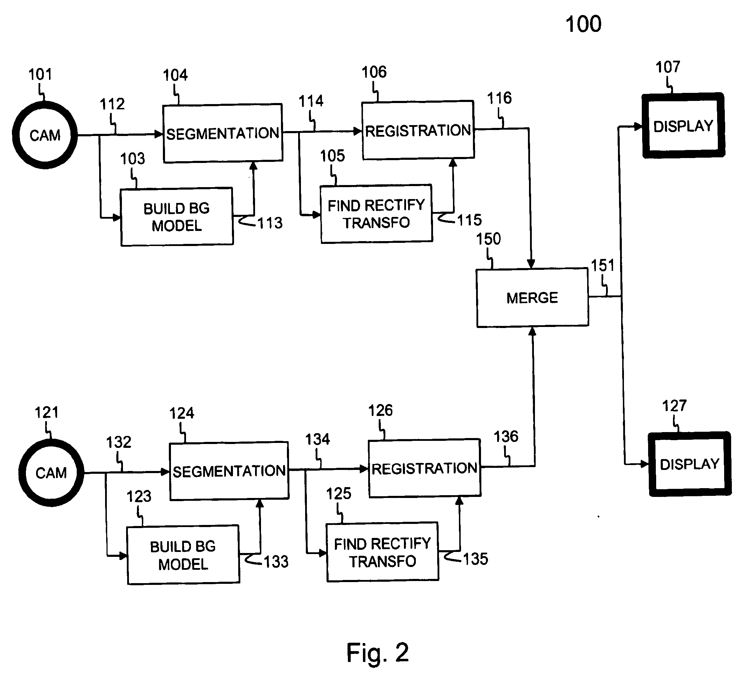

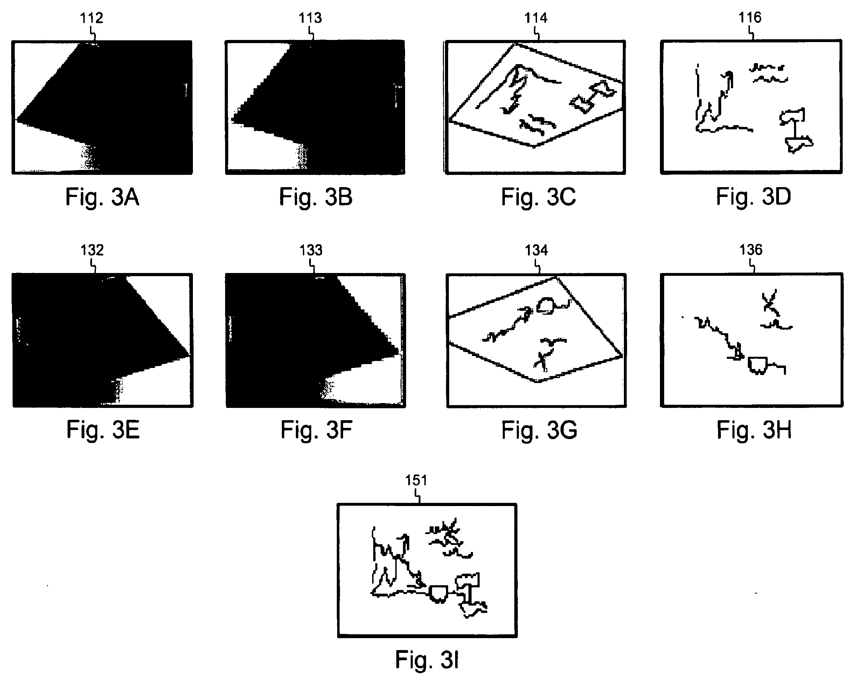

The users at the different locations participating in a videoconference or more generally a remote collaboration session, point their cameras at a white sheet of paper or a whiteboard available in the room. The users draw on the paper or the whiteboard with a regular pencil. The system according to the invention merges the feeds coming from different locations and delivers a common, composited drawing to the displays at the different locations. The system can be implemented for two users or locations involved in the collaboration. The extension to more than two users is straightforward. Special care is required to register all views, i.e. to find the right geometric transformation from each sheet of paper to the display, and to realize a good segmentation of the drawings under varying light conditions. This will be explained in more detail with reference to Fig. 2 and Figs. 3A - 3I in the following paragraphs.

In general, the common view combining multiple views, referenced 151 in Fig. 2 and illustrated by Fig. 3I, may be formulated as

$$O(x,y) = F(I_1(T_1(x,y)), S_1(T_1(x,y)), \cdots I_N(T_N(x,y)), S_N(T_N(x,y))) \tag{1}$$

Herein

x represents a horizontal pixel coordinate;
y represents a vertical pixel coordinate;
$O(x,y)$ represents the common view at pixel (x,y);
$I_{1..N}(x,y)$ represent the N input images at pixel (x,y);
$S_{1..N}(x,y)$ represent the N segmentation masks at pixel (x,y);
$T_{1..N}(x,y)$ represent the N geometric registration transformations at pixel (x,y);
F represents the merging function; and
N represents the amount of locations involved in the remote collaboration.

Fig. 2 represents a functional block diagram of the system according to the present invention deployed for two users at two distinct remote locations. Obviously, the system can be extended to any amount of users or locations involved. At the first location camera 101 captures images from a paper sheet whereon the first user is drawing with pencil. The captured images 112, the content of which is illustrated by Fig. 3A, are then subject to segmentation. The segmentation module, SEGMENTATION 104, shall separate the foreground, i.e. the pencil drawing, from the background and set the alpha mask. Thereto, the module BUILD BG MODEL 103, shall determine the background view 113 illustrated by Fig. 3B. Example algorithms used by the background model building module 103 are described further below. The background view 113 is subtracted from the captured images 112 by segmentation module 104 as a result of which the foreground view 114 is generated. This foreground view 114 is illustrated by Fig. 3C. Next, registration module REGISTRATION 106 shall apply a geometric transformation 115 to map the pixels of the captured images onto the pixels of a display, DISPLAY 107, that will be used at the first location to show the composed common drawing. The geometric transformation 115 to be applied is determined by the module FIND RECTIFY TRANSFO 105. Example algorithms that may be used by module 115 to find an appropriate transformation are described further below. The contents of the registered images 116 for the first location is illustrated by Fig. 3D.

In a similar fashion, camera 121 captures images 132 of drawings made by the second user at the second location on a different paper sheet. The captured images 132 are supplied to a segmentation module 124 that separates the foreground pencil drawing 134 after a background model 133 has been determined by module 123. After segmentation, the images 134 still have to be registered. Thereto, registration module 126 applies a geometrical transformation 135 that is determined by module 125. The captured and inputted images 132, the background model 133, the foreground pencil drawings obtained after segmentation, and the registered drawings 136 coming from the second user are illustrated respectively by Fig. 3E, Fig. 3F, Fig. 3G and Fig. 3H.

The registered images from the first user and second user, i.e. 116 and 136, are merged by the module MERGE 150 to form a composed drawing 151 wherein the pencil drawings of the first user and second user are combined. This composed drawing 151 is illustrated by Fig. 3I, and delivered to display 107 at the first location and display 127 at the second location.

In the following paragraphs, three example algorithms for registering the views are described, i.e. three possible algorithms that can be implemented in FIND RECTIFY TRANSFO modules 105 and 125 in order to determine an appropriate registration transformation. In any of these three examples, Ti(x,y) is a homography:

$$T_i(x, y) = \begin{bmatrix} u \\ v \end{bmatrix} \tag{2}$$

Herein

$$u = \frac{x'}{t'} \tag{3}$$

$$v = \frac{y'}{t'} \tag{4}$$

with

$$\begin{bmatrix} x' \\ y' \\ t' \end{bmatrix} = \begin{bmatrix} h^i_{00} & h^i_{01} & h^i_{02} \\ h^i_{10} & h^i_{11} & h^i_{12} \\ h^i_{20} & h^i_{21} & h^i_{22} \end{bmatrix} \cdot \begin{bmatrix} x \\ y \\ 1 \end{bmatrix} \tag{5}$$

Herein,

u represents a horizontal coordinate of a pixel in the transformed image after dehomogenization;
v represents a vertical coordinate of a pixel in the transformed image after dehomogenization;
x' represents a homogeneous horizontal coordinate of a pixel in the transformed image;
y' represents a homogeneous vertical coordinate of a pixel in the transformed image;
t' represents a homogeneous scaling coordinate of a pixel in the transformed image; and
$h^i_{kl}$ represent the elements of the homography matrix that defines the image transformation that registers a perspectively distorted input image into the registered common view. How this homography matrix may be determined is explained in the following paragraphs.

In a first implementation of the registration, it is required that the borders of the paper sheet can be detected well. This implies that the presumably white sheet of paper has a color that significantly differs from the non-white table. The minimum difference in color required depends on the lighting conditions, color depth resolution and noise of the cameras 101 and 121. Also, at least 3 edges of the paper sheet must be visible to the camera. With the further assumption that the paper sheet is rectangular in shape, three edges are sufficient to find the correct geometric transformation from the rectangular paper sheet to a rectified common view on the displays.

A second implementation of the registration requires the users to first draw an approximate rectangle on the paper sheet as a means for calibration, prior to the actual drawing. This quasi-rectangle is detected by the system and the best-fitting geometrical transformation is between the quasi-rectangle on the sheet and the rectified common view on the displays is determined by modules 105 and 125.

A third implementation of the registration concerns a case wherein registering is done based on the actual drawing itself. At the beginning, when there is no drawing on either one of the sheets, the common view 151 is created from the camera feeds as they are, i.e. untransformed. As soon the users start to draw, the drawings themselves become features that need to be stabilized. This means that if they undergo a transformation, due to translating or rotating the paper sheet, the inverse transformation must be applied by the system to compensate for this translation or rotation, and to register the drawing to the common view 151. In this case it is not possible to rectify eventual perspective distortion, so a circle in a drawing on the paper sheet might look like an ellipse in the common view, a rectangle in a drawing on a paper sheet might look like an arbitrary quadrilateral, etc.

For the sake of completeness, it is noticed that a variant of the present invention that applies no registration at all, could be thought of as well. In such variant:

$$T_i(x,y) = [x,y] \tag{6}$$

The incoming camera feeds in other words are not geometrically transformed before being combined into a common view. The users themselves have to take care of good registration by properly positioning the sheet of paper in front of the camera. In order to stabilize the drawing, users should not move the paper sheet as soon as they've begun drawing.

In the following paragraphs three alternative algorithms for segmenting the drawings from the sheet of paper, i.e. the background, will be described. These alternative algorithms that may be implemented in the background model building modules 103 and 123 each have a background paper model based on different assumptions. They all yield a transparency mask or so called alpha mask.

A first implementation of the segmentation assumes that the sheet of paper 108 is only sparsely drawn upon. In other words, there is more white than ink in the sheet. The segmentation function, 104 and 124 in Fig. 2, looks for the observed shade of white in each region of the image, and sets white pixels in each region to the most prominent light color in a local neighborhood, thereby omitting all other colors as actual drawing. Thereafter, for each pixel, the alpha-mask is determined by a smooth step function of the difference between the observed pixel color and the estimated local shade of white. The variance to this shade of white may be taken into account. The alpha-mask, 114 and 134 in Fig. 2, sets the transparency of the image to enable merging multiple feeds on top of each other.

A second implementation of the segmentation function assumes that thin structures are drawn, not necessarily sparse. The observed image is dilated several times with a small window. Dilation means applying the lightest color within a small window to all pixels in that window. As a consequence, thin dark structures disappear. Next, the resulting dilated image is subtracted from the original input image to determine the alpha-mask, 114 and 134 in Fig. 2.

A third implementation of the segmentation function makes no assumptions on the drawings, but assumes a quasi time-constant local paper sheet color. Thus, it is assumed that the pixel color of the sheet of paper does not vary too much over time. The color model may be adaptive to compensate for the small variations over time, but not to an extent that it would start learning ink color as the color of paper. Any pixel outside the learned color model is labeled as ink. Again, this results in the alpha-masks 114 and 134 being generated.

Since for the three implementations described here above, the hand and pencil don't follow the color model of the sheet of paper, the hand and pencil are seen as foreground and are visible on the common view 151. This gives feedback to the users and may be exploited as a pointing device, something lacking in prior art whiteboard systems.

It is noticed that the above segmentation algorithms may be combined in a single segmentation module. It is also noticed that the possibility exists to implement a system according to the present invention without segmentation. Then, the two or more views captured are combined in a non-adaptive way, i.e. in the same manner for the entire image. Examples are adding the two images or multiplying them. In some cases this will yield sufficient results from a user experience perspective. In many cases it will not.

It is further remarked that several options exist for splitting or combining the different modules that form part of a system according to the present invention over different client hardware/software or server hardware/software. One can even imagine a dynamic architecture with negotiation between users about who is doing which computational tasks in order to balance the load.

In Fig. 3, it may for instance be assumed that the modules 103, 104, 105, 106 and the merge function 150 are performed by hardware/software at the first location. The first location hence acts as master, does the merge and sends the common view back, whereas the second location acts as slave. Alternatively, it is possible to have a symmetric setup where all clients do the merge, since the computational complexity and intensiveness thereof is limited.

In general, the merge function 150 could be summarized as follows:

$$O(x,y) = \frac{\sum_{i=1..N} S_i(T_i(x,y)) \cdot I_i(T_i(x,y)) + W(x,y)}{\sum_{i=1..N} S_i(T_i(x,y)) + 1} \tag{6}$$

Herein,

W(x,y) represents a background colored pixel.

Although the implementations at the first location and second location are assumed identical in the above example, it is possible that the segmentation and registration functions will be different for the different channels.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein. In other words, it is contemplated to cover any and all modifications, variations or equivalents that fall within the scope of the basic underlying principles and whose essential attributes are claimed in this patent application. It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

**Claims**

1. A system comprising an application (103, 104, 105, 106, 123, 124, 125, 126, 150) for remote collaboration between multiple parties at different locations, said application (103, 104, 105, 106, 123, 124, 125, 126, 150) being adapted to receive a local image (112, 132) of a paper sheet (108) or whiteboard, captured at each location by a camera (101, 121), and **characterised in that** said application (103, 104, 105, 106, 123, 124, 125, 126, 150) is adapted to merge local images (112, 132) captured at said different locations to thereby generate a common image (151) so that a single surface can be written on by all the parties, said application further comprises:

   - registration means (105, 106, 125, 126) adapted to register each local image by geometrically transforming image pixels within said local image to image pixels of said common image (151) through translation or rotation; and
   - segmentation means (103, 104, 123, 124) adapted to segment each local image by compensating for differing backgrounds between said local images (112, 132).

2. A system comprising an application (103, 104, 105, 106, 123, 124, 125, 126, 150) for remote collaboration according to claim 1, wherein said registration means (105, 106, 125, 126) comprises:

   - means for detecting at least three edges of said paper sheet (108) or said whiteboard; and
   - means for geometrically transforming image pixels within said paper sheet (108) or whiteboard.

3. A system comprising an application (103, 104, 105, 106, 123, 124, 125, 126, 150) for remote collaboration according to claim 1, wherein said registration means (105, 106, 125, 126) comprises:

   - means for detecting a quasi-rectangle drawn on said paper sheet (108) or said whiteboard; and
   - means for geometrically transforming image pixels within said quasi-rectangle.

4. A system comprising an application (103, 104, 105, 106, 123, 124, 125, 126, 150) for remote collaboration according to claim 1, wherein said registration means (105, 106, 125, 126) comprises:

   - means for detecting a drawing on said paper sheet (108) or said whiteboard; and
   - means for geometrically transforming image pixels based on tracking of said drawing.

5. A system comprising an application (103, 104, 105, 106, 123, 124, 125, 126, 150) for remote collaboration according to claim 1, wherein said segmentation means (103, 104, 123, 124) comprises:

   - means for dilating an observed image; and
   - means for subtracting said dilated image from said observed input image.

6. A system comprising an application (103, 104, 105, 106, 123, 124, 125, 126, 150) for remote collaboration according to claim 1, wherein said segmentation means (103, 104, 123, 124) comprises:

   - means for learning a paper colour; and
   - means for determining a difference between an observed pixel colour and said paper colour learned.

7. A method of operating a data processing system in a system for remote collaboration between multiple parties at different locations, said method comprising:

   - receiving from a camera (101, 121) at each location a local image (112, 132) capturing a paper sheet (108) or whiteboard at said location; **characterized in that**
   - merging local images (112, 132) captured at said different locations to thereby generate a common image (151) so that a single surface can be written on by all the parties; and
   - distributing said common image (151) to a display (107, 127) at each location to be displayed prior to merging said local images (112, 132), said method comprises:
   - registering each local image by geometrically transforming image pixels within said local image to image pixels of said common image (151) through translation or rotation; and
   - segmenting each local image by compensating for differing backgrounds between said local images (112, 132).

8. A computer program comprising software code adapted to perform the method of claim 7.

9. A computer readable storage medium comprising the computer program of claim 8.

**Patentansprüche**

1. System, umfassend eine Anwendung (103, 104, 105, 106, 123, 124, 125, 126, 150) für die Fernzusammenarbeit zwischen mehreren Parteien an unterschiedlichen Orten, wobei besagte Anwendung (103, 104, 105, 106, 123, 124, 125, 126, 150) angepasst ist, um ein lokales Bild (112, 132) eines Papierblatts (108) oder einer Weißwandtafel zu empfangen, das an jedem Ort von einer Kamera (101, 121) erfasst wird, und **dadurch gekennzeichnet, dass** besagte Anwendung (103, 104, 105, 106, 123, 124, 125, 126, 150) angepasst ist, um lokale Bilder (112, 132), die an besagten unterschiedlichen Orten erfasst werden, zusammenzufügen, um dadurch ein gemeinsames Bild (151) zu erzeugen, so dass eine einzige Oberfläche von allen Parteien beschrieben werden kann, wobei besagte Anwendung weiterhin Folgendes umfasst:

   - Registriermittel (105, 106, 125, 126), die angepasst sind, um jedes lokale Bild durch geometrisches Umwandeln von Bildpixeln innerhalb des besagten lokalen Bilds in Bildpixel des besagten gemeinsamen Bilds (151) durch Translation oder Rotation zu registrieren; und
   - Segmentiermittel (103, 104, 123, 124), die angepasst sind, um jedes lokale Bild durch Ausgleichen abweichender Hintergründe zwischen den besagten lokalen Bildern (112, 132) zu segmentieren.

2. System, umfassend eine Anwendung (103, 104, 105, 106, 123, 124, 125, 126, 150) für Fernzusammenarbeit nach Anspruch 1, wobei besagte Registriermittel (105, 106, 125, 126) Folgendes umfassen:

   - Mittel zum Erkennen von mindestens drei Rändern des besagten Papierblatts (108) oder der besagten Weißwandtafel; und
   - Mittel zum geometrischen Umwandeln von Bildpixeln innerhalb des besagten Papierblatts (108) oder der Weißwandtafel.

3. System, umfassend eine Anwendung (103, 104, 105, 106, 123, 124, 125, 126, 150) für Fernzusammenarbeit nach Anspruch 1, wobei besagte Registriermittel (105, 106, 125, 126) Folgendes umfassen:

   - Mittel zum Erkennen eines Quasi-Rechtecks, das auf besagtes Papierblatt (108) oder besagte Weißwandtafel gezeichnet ist; und
   - Mittel zum geometrischen Umwandeln von Bildpixeln innerhalb des besagten Quasi-Rechtecks.

4. System, umfassend eine Anwendung (103, 104, 105, 106, 123, 124, 125, 126, 150) für Fernzusammenarbeit nach Anspruch 1, wobei besagte Registriermittel (105, 106, 125, 126) Folgendes umfassen:

- Mittel zum Erkennen einer Zeichnung auf dem besagten Papierblatt (108) oder der besagten Weißwandtafel; und
- Mittel zum geometrischen Umwandeln von Bildpixeln, basierend auf dem Aufspüren der besagten Zeichnung.

**5.** System, umfassend eine Anwendung (103, 104, 105, 106, 123, 124, 125, 126, 150) für Fernzusammenarbeit nach Anspruch 1, wobei besagte Segmentiermittel (103, 104, 123, 124) Folgendes umfassen:

- Mittel zum Erweitern eines beobachteten Bildes; und
- Mittel zum Subtrahieren des besagten erweiterten Bildes von dem besagten beobachteten Eingangsbild.

**6.** System, umfassend eine Anwendung (103, 104, 105, 106, 123, 124, 125, 126, 150) für Fernzusammenarbeit nach Anspruch 1, wobei besagte Segmentiermittel (103, 104, 123, 124) Folgendes umfassen:

- Mittel zum Lernen einer Papierfarbe; und
- Mittel zum Bestimmen eines Unterschieds zwischen einer beobachteten Pixelfarbe und der besagten gelernten Papierfarbe.

**7.** Verfahren zum Betreiben eines Datenverarbeitungssystems in einem System für die Fernzusammenarbeit zwischen mehreren Parteien an unterschiedlichen Orten, wobei das Verfahren Folgendes umfasst:

- Empfangen, von einer Kamera (101, 121) an jedem Ort, eines lokalen Bilds (112, 132), das ein Papierblatt (108) oder eine Weißwandtafel am besagten Ort erfasst; **gekennzeichnet durch**
- Zusammenfügen von lokalen Bildern (112, 132), die an besagten unterschiedlichen Orten erfasst werden, um **dadurch** ein gemeinsames Bild (151) zu erzeugen, so dass eine einzige Oberfläche von allen Parteien beschrieben werden kann; und
- Verteilen des besagten gemeinsamen Bilds (151) auf einer Anzeige (107, 127) an jedem anzuzeigenden Ort, wobei vor dem Zusammenfügen der besagten lokalen Bilder (112, 132) besagtes Verfahren Folgendes umfasst:
- Registrieren jedes lokalen Bilds **durch** geometrisches Umwandeln von Bildpixeln innerhalb des besagten lokalen Bilds in Bildpixel des besagten gemeinsamen Bilds (151) durch Translation oder Rotation; und
- Segmentieren jedes lokalen Bilds **durch** Ausgleichen abweichender Hintergründe zwischen den besagten lokalen Bildern (112, 132).

**8.** Computerprogramm, umfassend einen Softwarecode, der angepasst ist, um das Verfahren nach Anspruch 7 durchzuführen.

**9.** Computerlesbares Speichermedium, umfassend das Computerprogramm nach Anspruch 8.

## Revendications

**1.** Système comprenant une application (103, 104, 105, 106, 123, 124, 125, 126, 150) de collaboration à distance entre de multiples parties en différents emplacements, ladite application (103, 104, 105, 106, 123, 124, 125, 126, 150) étant adaptée pour recevoir une image locale (112, 132) d'une feuille de papier (108) ou d'un tableau blanc, capturée à chaque emplacement par un appareil photographique (101, 121), et **caractérisé en ce que** ladite application (103, 104, 105, 106, 123, 124, 125, 126, 150) est adaptée pour fusionner les images locales (112, 132) capturées auxdits différents emplacements afin de générer ainsi une image commune (151) de sorte que toutes les parties puissent écrire sur une surface unique, ladite application comprenant en outre :

- moyens d'enregistrement (105, 106, 125, 126) adaptés pour enregistrer chaque image locale en transformant géométriquement les pixels d'image à l'intérieur de ladite image locale en pixels d'image de ladite image commune (151) par translation ou rotation ; et
- moyens de segmentation (103, 104, 123, 124) adaptés pour segmenter chaque image locale en compensant différents arrière-plans entre lesdites images locales (112, 132).

**2.** Système comprenant une application (103, 104, 105, 106, 123, 124, 125, 126, 150) de collaboration à distance selon la revendication 1, avec lequel lesdits moyens d'enregistrement (105, 106, 125, 126) comprennent :

- moyens pour détecter au moins trois bords de ladite feuille de papier (108) ou dudit tableau blanc ; et
- moyens pour transformer géométriquement les pixels d'image à l'intérieur de ladite feuille de papier (108) ou dudit tableau blanc.

3. Système comprenant une application (103, 104, 105, 106, 123, 124, 125, 126, 150) de collaboration à distance selon la revendication 1, avec lequel lesdits moyens d'enregistrement (105, 106, 125, 126) comprennent :

- moyens pour détecter un quasi-rectangle dessiné sur ladite feuille de papier (108) ou ledit tableau blanc ; et
- moyens pour transformer géométriquement les pixels d'image à l'intérieur dudit quasi-rectangle.

4. Système comprenant une application (103, 104, 105, 106, 123, 124, 125, 126, 150) de collaboration à distance selon la revendication 1, avec lequel lesdits moyens d'enregistrement (105, 106, 125, 126) comprennent :

- moyens pour détecter un dessin sur ladite feuille de papier (108) ou ledit tableau blanc ; et
- moyens pour transformer géométriquement les pixels d'image en se basant sur le tracé dudit dessin.

5. Système comprenant une application (103, 104, 105, 106, 123, 124, 125, 126, 150) de collaboration à distance selon la revendication 1, avec lequel lesdits moyens de segmentation (103, 104, 123, 124) comprennent :

- moyens pour dilater une image observée ; et
- moyens pour soustraire ladite image dilatée de ladite image d'entrée observée.

6. Système comprenant une application (103, 104, 105, 106, 123, 124, 125, 126, 150) de collaboration à distance selon la revendication 1, avec lequel lesdits moyens de segmentation (103, 104, 123, 124) comprennent :

- moyens pour apprendre une couleur de papier ; et
- moyens pour déterminer une différence entre une couleur de pixel observée et ladite couleur de papier apprise.

7. Procédé pour faire fonctionner un système de traitement de données dans un système de collaboration à distance entre de multiples parties en différents emplacements, ledit procédé comprenant l'étape suivante :

- recevoir, de la part d'un appareil photographique (101, 121) à chaque emplacement, une image locale (112, 132) capturant une feuille de papier (108) ou un tableau blanc audit emplacement ; **caractérisé par** les étapes suivantes :
- fusionner les images locales (112, 132) capturées auxdits différents emplacements afin de générer ainsi une image commune (151) de sorte que toutes les parties puissent écrire sur une surface unique ; et
- distribuer ladite image commune (151) à un afficheur (107, 127) à chaque emplacement à afficher
avant de fusionner lesdites images locales (112, 132), ledit procédé comprenant en outre les étapes suivantes :

- enregistrer chaque image locale en transformant géométriquement les pixels d'image à l'intérieur de ladite image locale en pixels d'image de ladite image commune (151) par translation ou rotation ; et
- segmenter chaque image locale en compensant différents arrière-plans entre lesdites images locales (112, 132).

8. Programme informatique comprenant un code de programme adapté pour mettre en oeuvre le procédé selon la revendication 7.

9. Support de stockage lisible par ordinateur comprenant le programme informatique selon la revendication 8.

Fig. 1

**Fig. 2**

Fig. 3A

Fig. 3B

Fig. 3C

Fig. 3D

Fig. 3E

Fig. 3F

Fig. 3G

Fig. 3H

Fig. 3I

EP 2 637 353 B1

**EP 2 637 353 B1**

**REFERENCES CITED IN THE DESCRIPTION**

**Patent documents cited in the description**

- US 4400724 A